# EUROPEAN PATENT SPECIFICATION

(11) **EP 4 289 311 B1**
(45) Date of publication and mention of the grant of the patent: **09.07.2025**
(21) Application number: 23177469.6
(22) Date of filing: 06.06.2023
(51) Int. Cl.: A47B 96/14, A47B 96/20, A47B 13/02, F16B 12/40, F16B 12/44, A47B 47/05

(54) **FURNISHING ASSEMBLY**
EINRICHTUNGSANORDNUNG
ENSEMBLE D'AMEUBLEMENT

(30) Priority: 06.06.2022 IT 202200011903
(43) Date of publication of application: 13.12.2023
(73) Proprietor: WE DO HOME S.R.L., 33074 Fontanafredda (Pordenone) (IT)
(72) Inventor: DRIUSSO, Franco, I-33074 Fontanafredda, PORDENONE (IT); GRAFFEO, Massimo, I-33074 Fontanafredda, PORDENONE (IT); BATTISTUZZI, Stefano, I-33074 Fontanafredda, PORDENONE (IT)
(74) Representative: Gamba, Alessandro

(56) References cited:
- DE-A1- 102012 109 976
- GB-A- 895 462
- US-A- 5 516 225

## Description

The object of the present invention is a furnishing assembly.

The present invention is in the field of room furnishings.

In general terms, the present invention relates to furnishing assemblies comprising one or more panels that provide a user with a useful surface and a support structure that engages with and supports said at least one panel.

Preferably, the present invention is in the field of furnishings for kitchen environments.

The term furnishing assembly refers, for example, to dining tables, elevated structures, kitchens, structures for built-in home appliances, sideboards, islands and kitchen peninsulas.

The furnishing sector is known to be characterized by the constant search for new technical solutions that satisfy the functionality and comfort requested by users and that, at the same time, have aesthetically appealing shapes.

Specifically, within the technical sector, there is a desire for systems for connecting the parts to be hidden from view, thereby giving the furnishing assembly an aspect of elegance, while also offering the rigidity required for the various usages. In particular, it is fundamental to be able to manufacture structures that extend notably in height and length, as well as manufacturing cantilevered structures.

It is strongly requested, in fact, that the furnishing assembly be harmonious overall in its forms and that said forms may have reduced footprints.

Known in the prior art is the document DE102012109976A1 which relates to a table comprising a panel that extends longitudinally and that is supported by two pairs of legs that are joined therebetween by means of longitudinal stiffening elements, wherein each pair of legs is arranged at a longitudinal end of the panel and comprises two vertical legs joined therebetween by means of a horizontal crosspiece. The table comprises a single upper panel connected to each horizontal crosspiece by means of two connection groups that remain in view, thus detracting from the overall aesthetics of the table.

The object of the present invention is to present a furnishing assembly that meets the aforementioned needs and overcomes the aforementioned disadvantages.

This object is achieved by means of the furnishing assembly claimed in claim 1. The claims dependent thereupon seek protection for further features and entail further technical advantages.

Further features and advantages of the invention will be made readily apparent from the following description of preferred embodiment examples thereof, provided purely by way of non-limiting example, with reference to the accompanying figures, in which:
- Figures 1 and 1a show, respectively, two perspective views of a furnishing assembly, according to the present invention, according to a preferred embodiment;

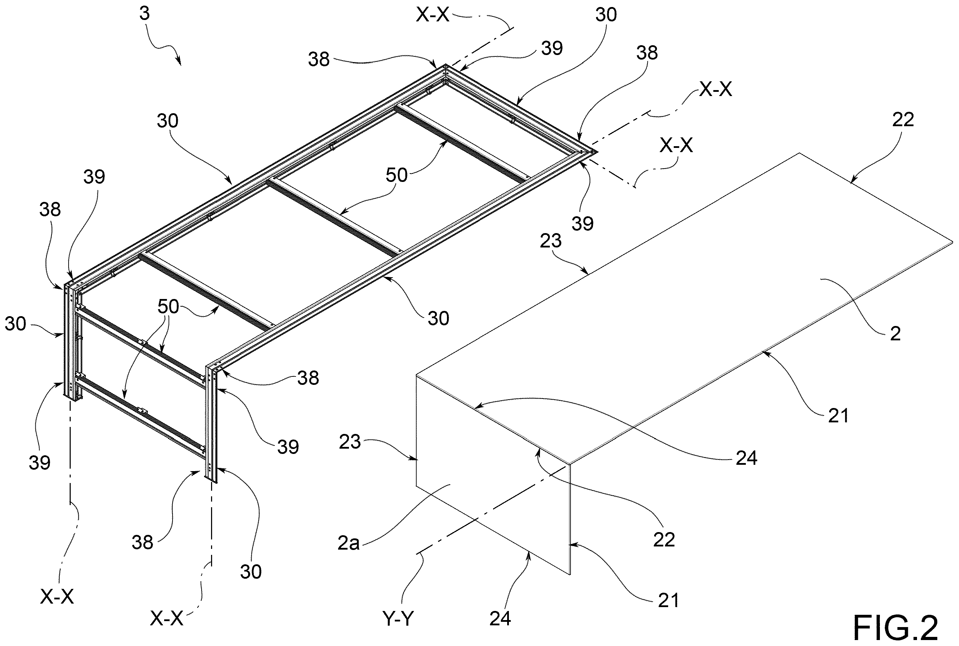

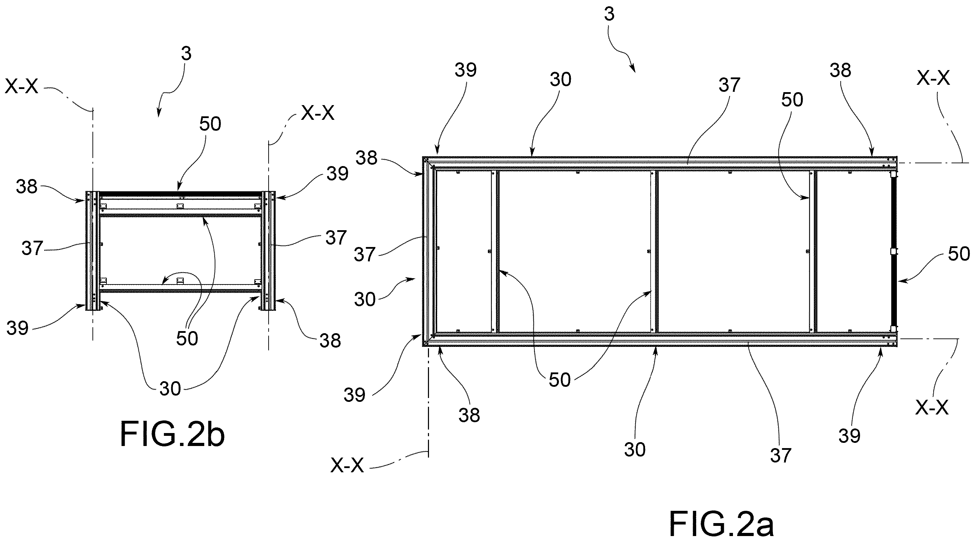

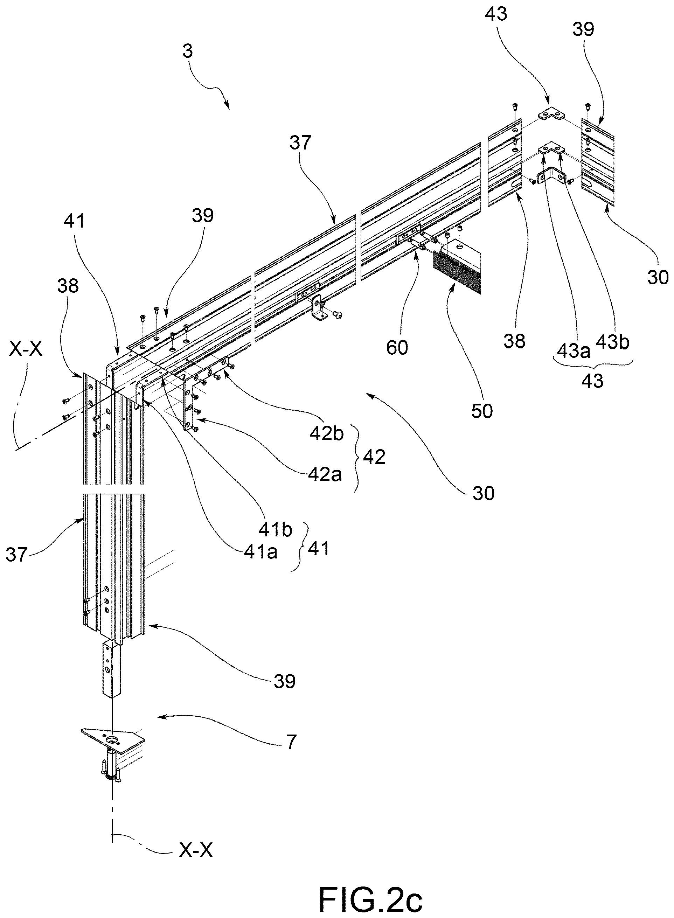

- Figure 2 depicts a perspective view of separate parts of a furnishing assembly in accordance with the present invention, according to a different preferred embodiment;
- Figures 2a and 2b represent a top view and a lateral view of the support structure that may be seen in Figure 2;
- Figure 2c represents an enlarged detail of the furnishing assembly of Figure 2, highlighting the connection group and a stiffening device;

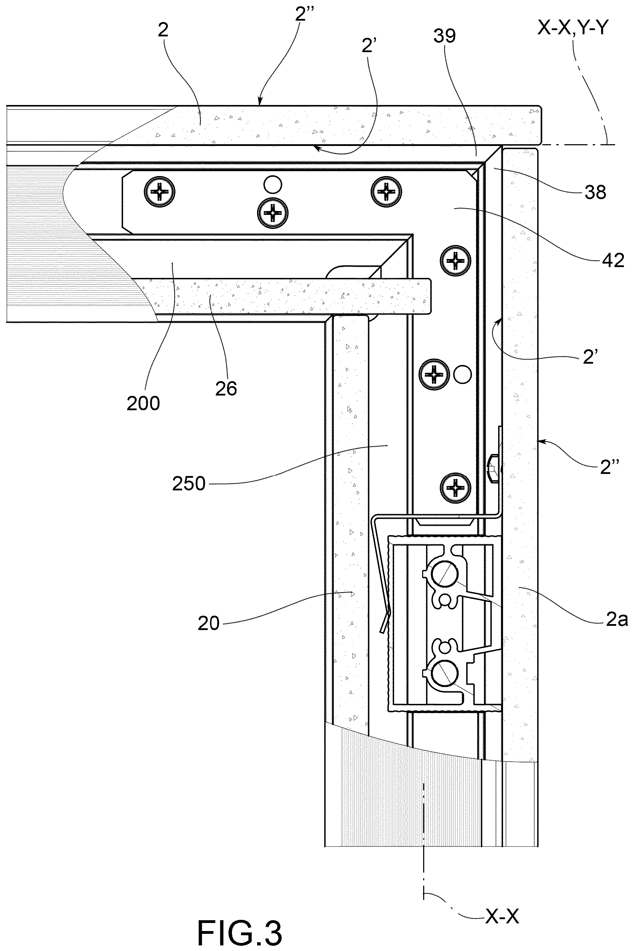

- Figure 3 shows a partial cross-section of an enlarged detail of an edge region of the furnishing assembly with the parts assembled, according to a preferred embodiment;

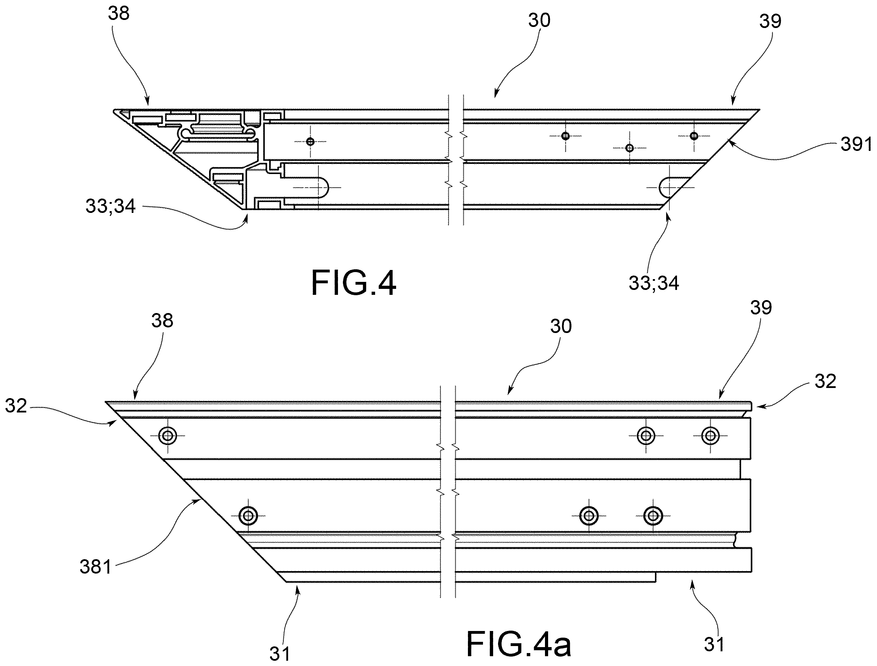

- Figures 4 and 4a show, respectively, a lateral view and a top view of a profile (lateral profile) that may be seen in Figure 2;

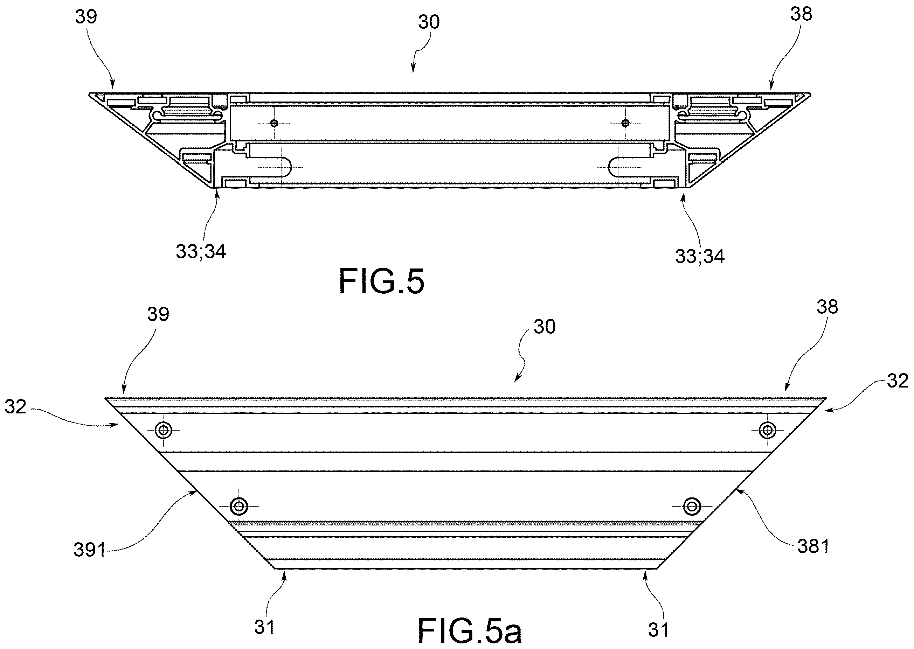

- Figures 5 and 5a show, respectively, a lateral view and a top view, of a profile (head profile) that may be seen in Figure 2;

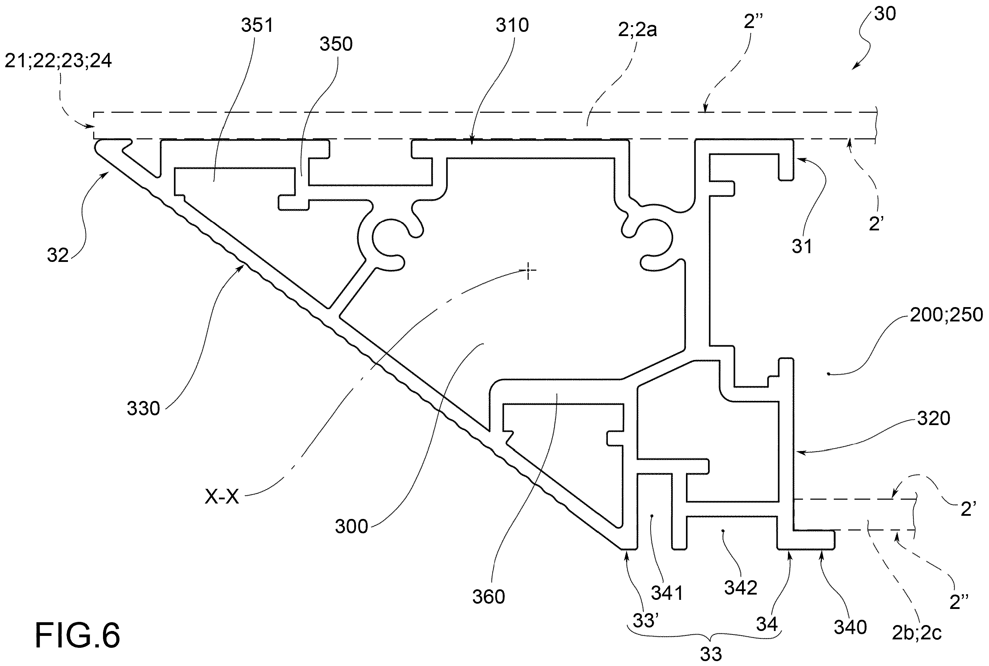

- Figure 6 is a cross-sectional view of a profile in accordance with the present invention, according to a preferred embodiment;
- Figure 7 shows a perspective view of a furnishing assembly, according to the present invention, according to a preferred embodiment;
- Figure 8 shows a top view of the support structure of Figure 7;

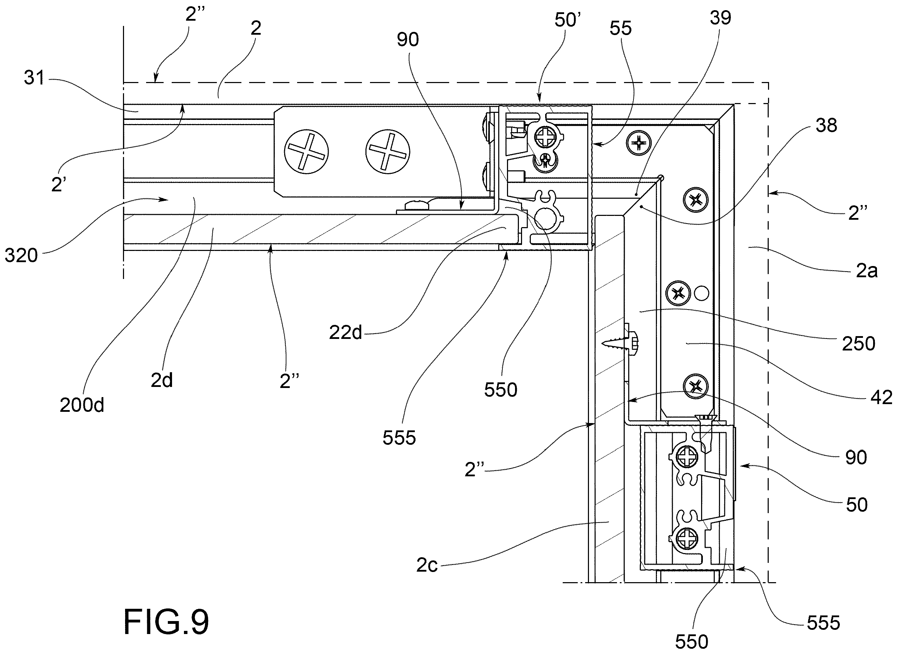

- Figure 9 represents a partial cross-section of an enlarged detail of an edge region of the furnishing assembly with the parts assembled, according to the embodiment of Figures 7 and 8;
- Figure 10 shows a perspective view of a furnishing assembly, according to the present invention, according to a preferred embodiment;
- Figure 11 shows a top view of the support structure of Figure 10;

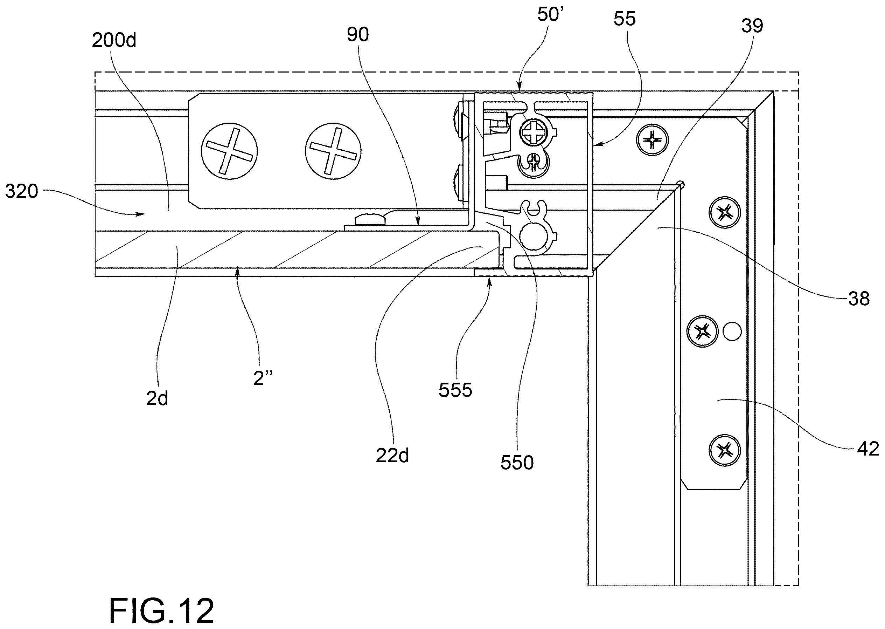

- Figure 12 shows a partial cross-section of an enlarged detail of an edge region of the furnishing assembly with the parts assembled, according to the embodiment of Figures 10 and 11.

With reference to the accompanying figures, a furnishing assembly according to the present invention is indicated in the entirety thereof with the numeral 1.

According to the present invention, the furnishing assembly 1 comprises at least one panel 2 and one support structure 3. The support structure 3 engages with at least one panel 2, supporting it in position.

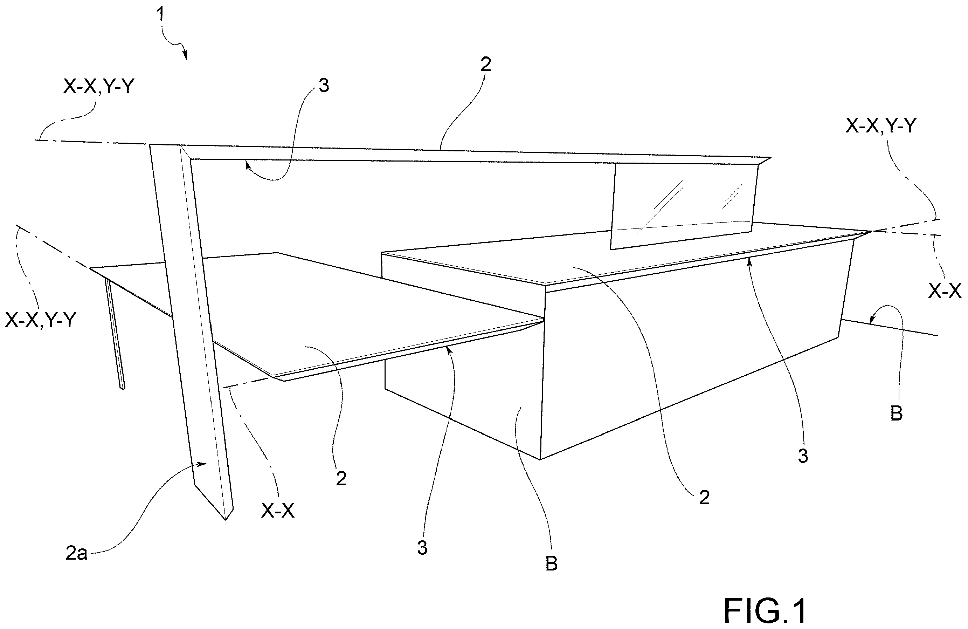

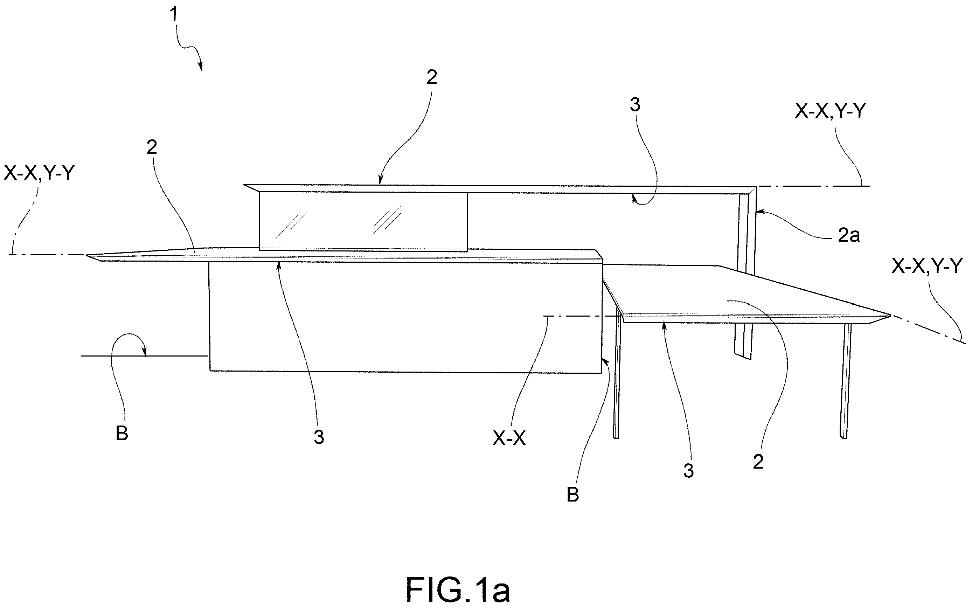

According to a preferred embodiment, as shown by way of example in Figure 1, a furnishing assembly 1 according to the present invention comprises a plurality of panels 2 and a plurality of support structures 3 as extensively described hereinafter.

According to the present invention, the panel 2 comprises free panel edges 21, 22, 23, 24 that define the dimensions thereof.

According to a preferred embodiment, the panel 2 comprises an internal first face 2', and an opposite external second face 2".

According to a preferred embodiment, the panel 2 is substantially planar, that is to say that it has a first dimension and a second dimension that prevail over the relevant thickness.

According to a preferred embodiment, the thickness is the dimension between the first face 2' and the second face 2".

According to a preferred embodiment, the term panel is intended to signify an element having an extension that is predominantly on an imaginary plane of the panel, for example made of wood or based upon wood.

According to a preferred embodiment, the support structure 3 may be rested upon a base plane B.

According to a preferred embodiment, the support structure 3 may be attached to a base plane B.

According to a preferred embodiment, said base plane B is a pavement or ground plane, which is for example substantially horizontal.

According to a preferred embodiment, said base plane B is a vertical wall, for example the perimeter wall of a room.

According to a preferred embodiment, said base plane B is the vertical side of a furnishing element, for example a wall unit, or a vertical side of a kitchen.

According to a preferred embodiment, the furnishing assembly 1 comprises a plurality of panels 2 and said base plane B is one of said panels 2.

That is to say that, according to a preferred embodiment, the support structure 3 engages with a first panel 2 and may be rested on and/or anchored to a further panel 2 that is spaced apart from said first panel 2, for example spaced apart vertically.

According to a preferred embodiment, the furnishing assembly 1 comprises a plurality of panels 2 and a plurality of support structures 3 that engage with one or more panels 2.

According to a preferred embodiment, said support structures 3 may be mutually engaged to each other.

According to the present invention, the support structure 3 comprises at least two extruded profiles 30.

According to a preferred embodiment, the support structure 3 comprises a plurality of extruded profiles 30.

According to a preferred embodiment, said profiles 30 are manufactured from metal or an alloy, for example aluminum.

According to a preferred embodiment, each profile 30 extends predominantly along a longitudinal axis X-X. Preferably, said longitudinal axis X-X is rectilinear.

According to the present invention, each profile 30 comprises two longitudinal ends 38, 39.

According to a preferred embodiment, each profile 30 comprises a central portion 37 that extends predominantly along the longitudinal axis X-X, comprised between the two longitudinal ends 38, 39.

According to a preferred embodiment, each profile 30 is made as one piece, that is to say each profile is a single element.

That is to say that, according to a preferred embodiment, the longitudinal ends 38, 39 are made as one piece together with the central portion 37.

According to a different preferred embodiment, the longitudinal ends 38, 39, in relation to the central portion 37, are distinct components and attached to said central portion 37, for example by means of a form or force fit or by means of threaded screws.

According to the present invention, each profile 30 comprises perimeter walls that define a central cavity 300.

According to a preferred embodiment, the perimeter walls extend along and around the longitudinal axis X-X.

According to a preferred embodiment, the perimeter walls have a substantially annular form, along and around the longitudinal axis X-X.

According to a preferred embodiment, the profile 30 has a parallelepiped shape with a polygonal base.

According to the present invention, the support structure 3 also comprises a connection group that is suitable for coupling two profiles 30 at respective longitudinal ends 38, 39, so that the two profiles 30 are incident to each other.

According to the present invention, the connection group is housed at least in part in a central cavity 300 of one of the two profiles 30 or is housed at least in part in the central cavities 300 of the two profiles 30.

According to a preferred embodiment, the connection group is completely housed in a central cavity 300 of one of the two profiles 30 or is housed at least in part in the central cavities 300 of the two profiles 30.

According to the present invention, the perimeter walls of a profile 30 comprise a first wall 310 that engages with the panel 2 and a second wall 320 that extends incident to the first wall 310 and forms a first internal profile corner 31 with the first wall 310.

According to a preferred embodiment, said first internal profile corner 31 is a substantially straight corner.

According to a preferred embodiment, the panel 2, preferably the internal face 2', is glued to the first wall 310.

According to the present invention, furthermore, the perimeter walls comprise a predominantly planar third wall 330 that extends incident to both the first wall 310 and the second wall 320.

According to the present invention, the third wall 330 forms a first external profile corner 32 with the first wall 310.

According to a preferred embodiment, the third wall 330 is attached to the second wall 320.

According to a preferred embodiment, the third wall 330 forms a second external profile corner 33 with the second wall 320.

Thus, according to a preferred embodiment, the profile 30 has a substantially parallelepiped shape with a triangular base.

According to a different preferred embodiment, the perimeter walls comprise a fourth wall 340 that extends incident to the second wall 320 and to the third wall 330. Preferably, said fourth wall 340 forms a second external profile corner 33' with the third wall and a second internal profile corner 34 with the second wall 320.

Thus, according to a preferred embodiment, the profile 30 has a substantially parallelepiped shape with a trapezoidal base.

According to the present invention, the first external profile corner 32 is arranged at a free panel edge 21, 22, 23, 24.

In other words, at least one profile 30 is coupled to said panel 2 in such a way that the first wall 310 is engaged with the panel and the first external profile corner 32 is substantially aligned with a free panel edge 21, 22, 23, 24.

According to a preferred embodiment, for example, the panel 2 is substantially horizontal and the first external profile corner 32 is substantially vertically aligned with a free panel edge 21, 22, 23, 24 of said panel 2.

According to a preferred embodiment, two profiles 30 are coupled to the panel 2 in such a way that the first external profile corners 32 of each profile 30 are arranged at two consecutive free panel edges 21, 22, 23, 24 of said panel 2.

According to a different preferred embodiment, the support structure 3 comprises three profiles 30 that are coupled to the panel 2 in such a way that the first external profile corners 32 of each profile 30 are arranged at two consecutive free panel edges 21, 22, 23, 24 of said panel 2.

According to a still further preferred embodiment, the support structure 3 comprises four profiles 30 that are coupled to the panel 2 in such a way that the first external profile corners 32 of each profile 30 are arranged at two consecutive free panel edges 21, 22, 23, 24 of said panel 2.

According to a preferred embodiment, the first wall 310 comprises at least one first end edge arranged at the longitudinal ends 38, 39.

According to a preferred embodiment, the second wall 320 comprises at least a second end edge arranged at the longitudinal ends 38, 39.

According to a preferred embodiment, the third wall 330 comprises at least a third end edge arranged at the longitudinal ends 38, 39.

According to a preferred embodiment, the two profiles 30 are coupled in such a way that the respective third end edges are arranged so as to be mutually in contact.

According to a preferred embodiment, the two profiles 30 are coupled in such a way that the respective first end edges and second end edges are arranged so as to be mutually in contact.

According to a preferred embodiment, the longitudinal ends 38, 39 comprise an end face 381, 391, axially and externally facing the central cavity 300.

According to a preferred embodiment, at least one end face 381, 391 extends incident to the longitudinal axis X-X.

In other words, preferably, said at least one end face 381, 391 extends over an imaginary plane that is incident and non-orthogonal in relation to the longitudinal axis X-X.

According to a preferred embodiment, the longitudinal ends 38, 39 of the two profiles 30 are arranged so as to be mutually in contact and engaged with the corner.

According to a preferred embodiment, the longitudinal end faces 381, 391 of the two profiles 30 are coupled in a planar manner and engaged with the corner.

According to a preferred embodiment, said imaginary plane that is incident to the longitudinal axis X-X passes through the first end edge and/or the second end edge and/or the third end edge.

According to a preferred embodiment, at at least one of said longitudinal ends 38, 39, the first internal profile corner 31 and the first external profile corner 32 protrude axially in relation to the second external profile corner 33', preferably also in relation to the second internal profile corner 34.

According to a preferred embodiment, the connection group comprises at least one angular element 41, 42, 43 that is suitable for coupling the two profiles 30.

Preferably, the connection group comprises a plurality of angular elements 41, 42, 43.

According to a preferred embodiment, each angular element 41, 42, 43 comprises two end portions 41a, 41b, 43a, 42b, 43a, 43b that are incident to each other, for example conforming to an L shape.

According to a preferred embodiment, each end portion 41a, 41b, 43a, 42b, 43a, 43b is housed in a relevant central cavity 300 of the two profiles 30.

Preferably, each end portion 41a, 41b, 43a, 42b, 43a, 43b has a substantially planar form, that is to say that each end portion has two dimensions that prevail over the third dimension, namely the thickness.

According to a preferred embodiment, at least one angular element 41 is engaged with the first wall 310 of a profile 30 at the first external profile corner 32.

Preferably, each end portion 41a, 41b of said angular element 41 is engaged with, preferably attached to, a relevant first wall 310, for example by means of threaded screws passing through said first wall 310.

According to a preferred embodiment, at least one profile 30 comprises connection walls 350, 360 that project from the perimeter walls of the central cavity 300, wherein at least one angular element 41, 42, 43 engages with said connection walls 350, 360.

According to a preferred embodiment, at least one profile 30 comprises connection walls 350, projecting from the first wall 310 into the central cavity 300, that define a connection seat 351 with the first wall 310 and/or with the third wall 330.

Preferably, the shape of said connection seat 351 is complementary to the end portions 41a, 41b and an angular element 41 housed in said connection seat 351, for example implementing a form fit coupling with the connection walls 350.

According to the invention, the support structure 3 comprises at least one stiffening device 50 that extends outside the central cavity 300 incident to the second wall 320 of a profile 30.

According to the invention, the support structure 3 comprises body connection means 60 that engage with said second wall 320 and that are suitable for connecting said stiffening device 50 to said profile 30.

According to a preferred embodiment, the body connection means 60 engage with the second wall 320 in proximity to, preferably at, the first external profile corner 31.

According to a preferred embodiment, the at least one stiffening device 50 is at least partially in contact with the panel 2, for example in contact with the first face 2', in such a way as to support the panel 2.

According to a preferred embodiment, the stiffening device 50 is an extruded profile, for example polygon-based, having at least one planar face that is suitable for being engaged with the panel 2.

According to the invention, the furnishing assembly 1 comprises at least one auxiliary cover panel 2b that engages with at least one profile 30 in a position distal from the first wall 310 and defines a mounting chamber 200 with the panel 2.

According to a preferred embodiment, the auxiliary cover panel 2b engages with the profile at the second external profile corner 33.

According to a different preferred embodiment, the auxiliary cover panel 2b engages with the profile at the second external profile corner 34.

According to the invention, the at least one stiffening device 50 is housed in said mounting chamber 200.

According to a preferred embodiment, the connection group, for example an angular element 41, 42, 43, is housed, at least in part, in the mounting chamber 200.

According to a preferred embodiment, the furnishing assembly 1 comprises a plurality of stiffening devices 50, each of which is engaged with one or more profiles 30.

According to a preferred embodiment, the support structure 3 comprises two mutually distanced lateral profiles 30 and a plurality of stiffening devices 50 engaged with both of said lateral profiles 30.

Preferably, furthermore, the panel 2 prevalently extends along a panel axis Y-Y and said stiffening devices 50 are mutually distanced along the panel axis Y-Y.

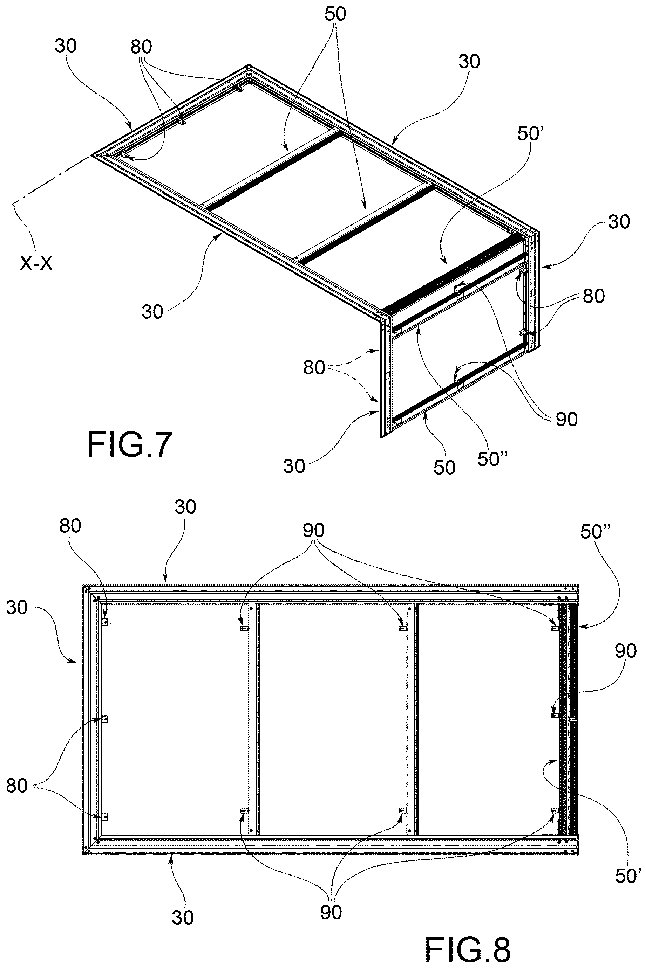

According to a preferred embodiment, the panel 2 extends predominantly along a panel axis Y-Y and along the longitudinal axis X-X of the head profile 30, as shown by way of example in Figures 7, 8, 10 and 11.

According to a preferred embodiment, the support structure 3 comprises two lateral profiles 30 mutually spaced apart, and a head profile 30 engaged between the corresponding longitudinal ends 38, 39 of said lateral profiles 30.

According to a preferred embodiment, the support structure 3 comprises two head profiles 30, each of which is engaged between the corresponding longitudinal ends 38, 39 of said profiles 30.

That is to say that, according to a preferred embodiment, the support structure 3 has a rectangular or square plan shape comprising two lateral profiles 30 and two head profiles 30.

According to a preferred embodiment, the support structure 3 comprises two lateral profiles 30 and a single head profile 30, wherein the lateral profiles 30, which extend substantially parallel along the panel axis Y-Y, are joined by the head profile 30 to the respective longitudinal edges 38, 39. Preferably, the remaining longitudinal edges 38, 39 of the profiles 30 are joined at respective lower profiles 30.

Preferably, the panel 2 is engaged with the first walls 310 of said lateral profiles 30 and/or with the first walls 310 of said head profiles 30.

According to a preferred embodiment, the head profile 30 has the same characteristics as the lateral profiles 30.

According to a preferred embodiment, the support structure 3 comprises two mutually distanced lateral profiles 30 and two lower profiles 30.

In particular, each lower profile 30 comprises a longitudinal end 38, 39 coupled to a relevant lateral profile 30, in particular at a longitudinal end 38, 39 thereof, and the free longitudinal end 38, 39, that is to say distal in relation to the panel 2, may be rested on a ground plane B.

Preferably, the lower profile 30 extends substantially vertically.

Preferably, the lateral profile 30 extends substantially horizontally, preferably substantially parallel to the panel axis Y-Y.

Preferably, the head profile 30 extends substantially horizontally, preferably in such a way as to be incident or orthogonal to the panel axis Y-Y.

Preferably, each lower profile 30 comprises a closure plug 7, for example engaged with, or screwed to, said free longitudinal end 38, 39.

Preferably, the panel 2 is engaged with the first walls 310 of said lateral profiles 30.

According to one preferred embodiment, each lower profile 30 is individually encased.

According to a different preferred embodiment, the furnishing assembly 1 comprises a lower panel 2a that engages with the first walls 310 of said lower profiles 30.

According to a preferred embodiment, the furnishing assembly 1 also comprises a lower auxiliary cover panel 2c that engages with at least one of said lower profiles 30, thereby defining a mounting chamber 250 with the lower panel 2a.

According to a preferred embodiment, the lower profiles 30 have the same characteristics as the lateral profiles 30.

According to a preferred embodiment, the support structure 3 comprises at least one stiffening device 50 engaged with the two lower profiles 30, preferably housed in the lower mounting chamber 250.

According to a preferred embodiment, the connection group, for example an angular element 41, 42, 43, is housed, at least in part, in said lower mounting chamber 250.

According to a preferred embodiment, the support structure 3 comprises two lateral profiles 30, one head profile 30 coupled to two corresponding longitudinal ends 38, 39 of the lateral profiles 30 and two lower profiles 30 coupled to the other corresponding longitudinal ends 38, 39 of the lateral profiles 30.

According to a preferred embodiment, the perimeter walls, preferably the fourth wall 340, comprise a Cava LED fitting 341 that is suitable for housing an LED element, for example an LED line.

According to a preferred embodiment, the perimeter walls, preferably the fourth wall 340, comprise a lower Cava fitting 342 that is suitable for housing a vertical planar element, for example a glass plate.

According to a preferred embodiment, the furnishing assembly 1 comprises an auxiliary cover panel 2d that extends substantially parallel to the panel 2.

According to a preferred embodiment, the auxiliary cover panel 2d extends substantially horizontally.

Preferably, the panel 2 and the auxiliary cover panel 2d are substantially horizontal.

Preferably, the auxiliary cover panel 2d delimits a second mounting chamber 200d with the panel 2.

According to a preferred embodiment, the auxiliary cover panel 2d comprises a free panel edge 22d in a position proximal to the longitudinal end 39 of a profile 30.

Preferably, the free panel edge 22d is proximal to the longitudinal end 39 of a lateral profile 30 and to the relative longitudinal end 38 of the lower profile 30 engaged with the corner.

According to a preferred embodiment, the support structure 3 comprises a stiffening device 50 in a position proximal to the longitudinal end 39 of a profile 30.

According to a preferred embodiment, the stiffening device 50 which is proximal to the longitudinal end 39 of a profile 30 supports the auxiliary cover panel 2d.

According to a preferred embodiment, the support structure 3 comprises a stiffening device 50' proximal to the longitudinal end 39 of a lateral profile 30 and to the relative longitudinal end 38 of the lower profile 30 which is engaged with the corner.

According to a preferred embodiment, the support structure 3 comprises a second stiffening device 50" proximal to the longitudinal end 38 of a profile 30 which is lower and spaced apart from the relative longitudinal end 39 of the lateral profile 30 which is engaged with the corner.

Preferably, the second stiffening device 50" is vertically spaced apart from the longitudinal end 39 of the lateral profile 30, preferably also vertically spaced apart from the auxiliary cover panel 2d.

Preferably, the second stiffening device 50" is housed in the lower mounting chamber 250.

The stiffening device 50 comprises device walls 55.

According to a preferred embodiment, the device walls 55 extend predominantly along the longitudinal axis, preferably having a hollow polygonal cross-section, for example a hollow rectangular cross-section.

According to a preferred embodiment, the device walls 55 extend parallel to the head profiles 30.

According to a preferred embodiment, the stiffening device 50 comprises a hollow device 550 which is lowered in relation to the device walls 55, in which hollow device the free panel edge 22d is at least partially housed.

According to a preferred embodiment, the stiffening device 50 comprises a support projection 555 that at least partially delimits the hollow device 550.

Preferably, with the substantially horizontal auxiliary cover panel 2d, the support projection 555 extends predominantly horizontally, vertically supporting the free panel edge 22d, for example at a predefined vertical height in relation to the base plane B. In other words, the support projection 555 supports the weight of the auxiliary cover panel 2d.

According to a preferred embodiment, the support projection 555 is a free end of a lower lateral wall 55, for example having a substantially horizontal extension. Preferably, with the furnishing assembly 1 assembled, only said lower side wall 55 may be seen by an external user.

According to a preferred embodiment, said lower lateral wall 55 is proximal to the lower auxiliary cover panel 2c, for example proximal to the external second face 2" of the lower auxiliary cover panel 2c.

According to a preferred embodiment, said lower lateral wall 55 engages with the second face 2" of the auxiliary cover panel 2d.

According to a preferred embodiment, the lower auxiliary cover panel 2c extends substantially vertically.

According to a preferred embodiment, the lower panel 2a extends substantially vertically.

According to a preferred embodiment, the support structure 3 comprises second connection means 90 that are engaged mechanically, for example by means of appropriate threaded screws, both to the stiffening device 50, in particular to the lateral walls 55, and to the auxiliary cover panel 2d or to the lower auxiliary cover panel 2c.

According to a preferred embodiment, the second connection means 90 are engaged with a lateral wall 55 of the stiffening device 50 which is incident to the lower lateral wall 55, creating therewith, at least partially, the perimeter edges of the hollow device 550.

Preferably, said second connection means 90 are housed in the second mounting chamber 200d when engaged with the auxiliary cover panel 2d, or in the mounting chamber 250 when engaged with the lower auxiliary cover panel 2c.

According to a preferred embodiment, the second connection means 90 comprise one or a plurality of brackets having a substantially "L" shape.

Advantageously, the second connection means 90 support the auxiliary cover panel 2d or the lower auxiliary cover panel 2c and are hidden from the view of a user.

According to a preferred embodiment, the support structure 3 comprises third connection means 80 that are engaged mechanically, for example by means of appropriate threaded screws, both to a profile 30, and to the auxiliary cover panel 2d or to the lower auxiliary cover panel 2c.

According to a preferred embodiment, the third connection means 80 comprise one or a plurality of brackets having a substantially "L" shape.

Preferably, said second connection means 90 are housed in the second mounting chamber 200d when engaged with the auxiliary cover panel 2d, or in the mounting chamber 250 when engaged with the lower auxiliary cover panel 2c.

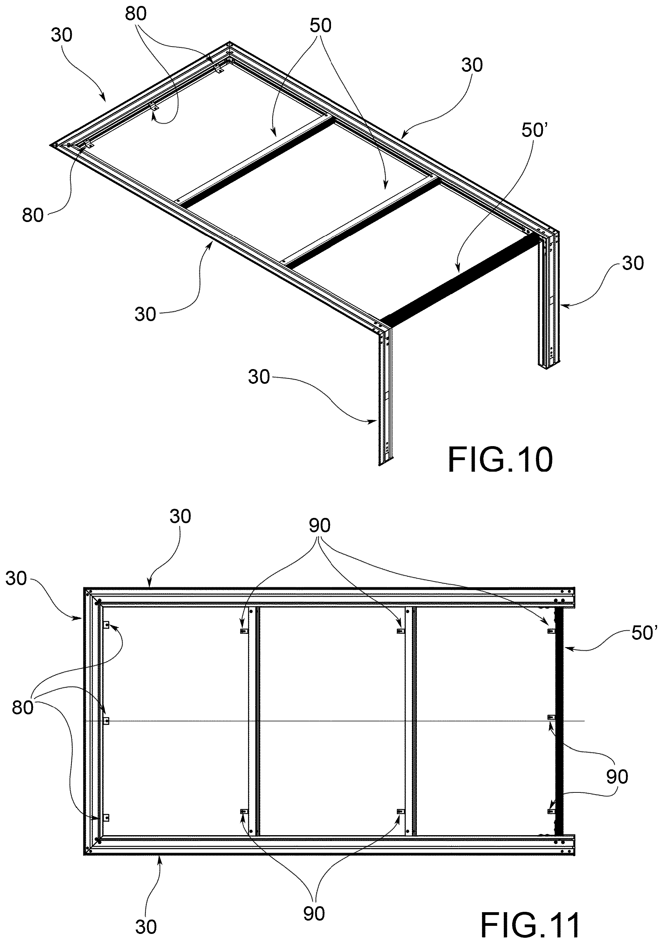

In the exemplary embodiment shown in Figures 10 and 11, the support structure 3 comprises third connection means 80 that mechanically connect the head profile 30 and the auxiliary cover panel 2d.

In the exemplary embodiment shown in Figures 7 and 8, the support structure 3 also comprises third connection means 80 that mechanically connect the lower profiles 30 and the lower auxiliary cover panel 2c.

According to a preferred embodiment, the third connection means 80 engage with the second wall 320 of the profile 30.

Advantageously, the third connection means 80 support the auxiliary cover panel 2d or the lower auxiliary cover panel 2c and are hidden from the view of a user.

Innovatively, the furnishing assembly fully fulfills the intended purpose by overcoming the typical problems of the prior art.

Advantageously, depending on the preferences and requirements of the user, the furnishing assembly is designed for the implementation of cantilevered structures and structures that extend in height.

Advantageously, in fact, the support structure engages with each panel in a peripheral panel region thereof, in particular at at least one free panel edge. Advantageously, large size panels may be used, both as regards height and length. Advantageously, structures with a considerable overhang may be implemented.

Advantageously, the furnishing assembly is designed in such a way as to hide the connection group from view. Advantageously, in fact, the angular connection elements are entirely housed in the central cavities of the profiles, at the respective angular ends.

Advantageously, each stiffening device is housed in the mounting chamber and/or in the lower mounting chamber, so as to be entirely hidden from view.

Advantageously, the at least one stiffening device supports the panel and prevents the panel from flexing, for example due to excessive loads or else due to the weight of the panel itself.

Advantageously, the support structure performs the function of supporting loads, such as objects or other structures, and it is therefore possible to use panels of reduced width.

Advantageously, it is possible to manufacture furnishing elements, for example tables, having overall reduced thicknesses, leaving more space lower down that may be utilized by the user, for example for a chair.

Advantageously, insofar as it is manufactured using a limited number of components, the furnishing assembly is simple to design, transport and assemble.

Advantageously, in fact, the same profile may be manufactured, for example cut, according to necessity, in order to make the lateral profiles and/or the head profiles and/or the lower profiles.

Advantageously, the application of panels is extremely simplified, for example by gluing, and other panel connection systems are not necessary.

Advantageously, the mounting chamber and the inner mounting chamber allow for the housing of further mounting assembly components, for example electrical cables for supplying power to LED lights applied to the profiles.

Advantageously, it is possible to individually substitute used or old panels whilst keeping all of the other components unaltered and avoiding the necessity of disassembling the other components.

Advantageously, by removing the panel, the entire support structure and stiffening devices are immediately accessible.

Advantageously, insofar as the panel is the main visible component, the furnishing assembly has a pleasing aesthetic effect, whilst the support structure is at least in part hidden from view.

Advantageously, the profiles are joined to each other, thereby giving a distinct sense of continuity, even at right angles. Advantageously, in fact, the longitudinal ends, in particular the third end edges of the third walls, are arranged so as to be mutually in contact to each other.

It is clear that a person skilled in the art may make changes to the invention described above in order to meet contingent needs, which changes all fall within the scope of protection as defined in the following claims.

## Claims

1. A furnishing assembly (1), for example a table or raised shelf, comprising:
i) at least one panel (2) which comprises free panel edges (21, 22, 23, 24);
ii) a support structure (3) which comprises:
- at least two extruded profiles (30), wherein each profile (30) comprises two longitudinal ends (38, 39) and perimeter walls defining a central cavity (300), wherein, for at least one profile (38, 39), said perimeter walls comprise:
• a first wall (310) which engages the at least one panel (2);
• a second wall (320) incident on the first wall (310) forming an internal profile corner (31);
• a prevalently planar third wall (330), incident both on the first wall (310) and on the second wall (320), wherein the third wall (330) forms a first external profile corner (32) with the first wall (310), wherein said first external profile corner (32) is positioned at a free panel edge (21, 22, 23, 24);
- a connection group housed in one or both central cavities (300), connected to two profiles (30) at respective longitudinal edges (38, 39), so that said profiles (30) extend incident to each other;
wherein the support structure (3) further comprises:
- at least one stiffening device (50) which extends outside the central cavity (300) incident to the second wall (320) of a profile (30);
- body connection means (60) which engage said second wall (320) at the first internal profile corner (31), connecting said stiffening device (50) to said profile (30);
wherein the furnishing assembly (1) is **characterized in that** it comprises at least one auxiliary cover panel (2b) which engages at least one profile (30) in a distal position from the first wall (310) and defines a mounting chamber (200) with the panel (2), and **in that** the at least one stiffening device (50) is housed in said mounting chamber (200).

2. Furnishing assembly (1) according to claim 1, wherein the third wall (330) comprises an end edge (331) at one of the longitudinal ends (38, 39), wherein the two profiles (30) are coupled so that the respective end edges (34) are positioned in mutual contact.

3. Furnishing assembly (1) according to any one of the preceding claims, wherein the longitudinal ends (38, 39) of the two profiles (30) are positioned in mutual contact and engaged at the corner.

4. Furnishing assembly (1) according to any one of the preceding claims, wherein the connection group comprises at least one angular element (41, 42, 43) which comprises two end portions (41a, 41b, 43a, 42b, 43a, 43b) incident to each other, for example L-shaped, wherein each end portion (41a, 41b, 43a, 42b, 43a, 43b) is housed in a respective central cavity (300).

5. Furnishing assembly (1) according to claim 4, wherein at least one angular element (41) is engaged with the first wall (310) at the first external profile corner (32).

6. Furnishing assembly (1) according to claim 4 or claim 5, wherein at least one profile (30) comprises connection walls (340, 350), which project from the perimeter walls into the central cavity (300), wherein at least one angular element (41, 42, 43) is engaged with said connection walls (340, 350).

7. Furnishing assembly (1) according to any one of the preceding claims, wherein the support structure (3) comprises two mutually distanced lateral profiles (30) and a plurality of stiffening devices (50) engaged with both of said lateral profiles (30), wherein the panel (2) prevalently extends along a panel axis (Y-Y) and said stiffening devices (50) are mutually distanced along the panel axis (Y-Y).

8. Furnishing assembly (1) according to any one of claims 1 to 5, wherein the support structure (3) comprises two lateral profiles (30) mutually spaced apart, and a head profile (30) engaged between the corresponding longitudinal ends (38, 39) of said lateral profiles (30), wherein the panel (2) is engaged with the first walls (310) of said lateral profiles (30) and/or of said head profile (30).

9. Furnishing assembly (1) according to claim 8, wherein the head profile (30) has the same characteristics as the lateral profiles (30).

10. Furnishing assembly (1) according to any one of claims 1 to 5, wherein the support structure (3) comprises two lateral profiles (30) mutually spaced apart, and two lower profiles (30), wherein each lower profile (30) is coupled with a respective lateral profile (30) and is restable on a ground floor (B), wherein the panel (2) is engaged with the first walls (310) of said lateral profiles (30).

11. Furnishing assembly (1) according to claim 10, comprising a lower panel (2a) engaged with the first walls (310) of said lower profiles (30), wherein the support structure (3) comprises at least one stiffening device (50) engaged with the two lower profiles (30).

12. Furnishing assembly (1) according to claim 10 or 11, wherein the lower profiles (30) have the same characteristics as the lateral profiles (30).

## Patentansprüche

1. Möbelanordnung (1), beispielsweise Tisch oder angehobenes Regal, umfassend:
i) wenigstens eine Platte (2), welche freie Plattenränder (21, 22, 23, 24) umfasst;
ii) eine Tragestruktur (3), welche umfasst:
- wenigstens zwei extrudierte Profile (30), wobei jedes Profil (30) zwei longitudinale Enden (38, 39) und Umfangswände umfasst, welche einen zentralen Hohlraum (300) definieren, wobei für wenigstens ein Profil (38, 39) die Umfangswände umfassen:
o eine erste Wand (310), welche mit der wenigstens einen Platte (2) eingreift;
o eine zweite Wand (320), welche an der ersten Wand (310) einfällt, wobei eine interne Profilecke (31) gebildet ist;
o eine vorwiegend planare dritte Wand (330), welche sowohl an der ersten Wand (310) als auch an der zweiten Wand (320) einfällt, wobei die dritte Wand (330) eine erste externe Profilecke (32) mit der ersten Wand (310) bildet, wobei die erste externe Profilecke (32) an einem freien Plattenrand (21, 22, 23, 24) positioniert ist;
- eine Verbindungsgruppe, welche in einem oder beiden zentralen Hohlräumen (300) aufgenommen ist, welche mit zwei Profilen (30) an jeweiligen longitudinalen Rändern (38, 39) verbunden ist, so dass sich die Profile (30) aneinander einfallend erstrecken;
wobei die Tragestruktur (3) ferner umfasst:
- wenigstens eine Versteifungsvorrichtung (50), welche sich außerhalb des zentralen Hohlraums (300) einfallend an die zweite Wand (320) eines Profils (30) erstreckt;
- Körper-Verbindungsmittel (60), welche mit der zweiten Wand (320) an der ersten internen Profilecke (31) eingreifen, welche die Versteifungsvorrichtung (50) mit dem Profil (30) verbinden;
wobei die Möbelanordnung (1) **dadurch gekennzeichnet ist, dass** sie wenigstens eine Hilfs-Abdeckungsplatte (2b) umfasst, welche mit wenigstens einem Profil (30) in einer distalen Position von der ersten Wand (310) eingreift und eine Montagekammer (200) mit der Platte (2) definiert, und dass die wenigstens eine Versteifungsvorrichtung (50) in der Montagekammer (200) aufgenommen ist.

2. Möbelanordnung (1) nach Anspruch 1, wobei die dritte Wand (330) einen Endrand (331) an einem der longitudinalen Enden (38, 39) umfasst, wobei die beiden Profile (30) derart gekoppelt sind, dass die entsprechenden Endränder (34) in wechselseitigem Kontakt positioniert sind.

3. Möbelanordnung (1) nach einem der vorhergehenden Ansprüche, wobei die longitudinalen Enden (38, 39) der beiden Profile (30) in wechselseitigem Kontakt und an der Ecke eingreifend positioniert sind.

4. Möbelanordnung (1) nach einem der vorhergehenden Ansprüche, wobei die Verbindungsgruppe wenigstens ein Winkelelement (41, 42, 43) umfasst, welches zwei Endabschnitte (41a, 41b, 43a, 42b, 43a, 43b) umfasst, welche aneinander einfallen, beispielsweise L-förmig, wobei jeder Endabschnitt (41a, 41b, 43a, 42b, 43a, 43b) in einem entsprechenden zentralen Hohlraum (300) aufgenommen ist.

5. Möbelanordnung (1) nach Anspruch 4, wobei wenigstens ein Winkelelement (41) mit der ersten Wand (310) an der ersten externen Profilecke (32) eingreift.

6. Möbelanordnung (1) nach Anspruch 4 oder Anspruch 5, wobei wenigstens ein Profil (30) Verbindungswände (340, 350) umfasst, welche von den Umfangswänden in den zentralen Hohlraum (300) vorstehen, wobei wenigstens ein Winkelelement (41, 42, 43) mit den Verbindungswänden (340, 350) eingreift.

7. Möbelanordnung (1) nach einem der vorhergehenden Ansprüche, wobei die Tragestruktur (3) zwei wechselseitig beabstandete laterale Profile (30) und eine Mehrzahl von Versteifungsvorrichtungen (50) umfasst, welche mit beiden der lateralen Profile (30) eingreifen, wobei sich die Platte (2) vorwiegend entlang einer Plattenachse (Y-Y) erstreckt und die Versteifungsvorrichtungen (50) wechselseitig entlang der Plattenachse (Y-Y) beabstandet sind.

8. Möbelanordnung (1) nach einem der Ansprüche 1 bis 5, wobei die Tragestruktur (3) zwei laterale Profile (30), welche wechselseitig beabstandet sind, und ein Kopfprofil (30) umfasst, welches zwischen den entsprechenden longitudinalen Enden (38, 39) der lateralen Profile (30) eingreift, wobei die Platte (2) mit den ersten Wänden (310) der lateralen Profile (30) und/oder des Kopfprofils (30) eingreift.

9. Möbelanordnung (1) nach Anspruch 8, wobei das Kopfprofil (30) dieselben Charakteristiken wie die lateralen Profile (30) aufweist.

10. Möbelanordnung (1) nach einem der Ansprüche 1 bis 5, wobei die Tragestruktur (3) zwei laterale Profile (30), welche wechselseitig beabstandet sind, und zwei untere Profile (30) umfasst, wobei jedes untere Profil (30) mit einem entsprechenden lateralen Profil (30) gekoppelt ist und an einem Untergrundboden (B) ruhen kann, wobei die Platte (2) mit den ersten Wänden (310) der lateralen Profile (30) eingreift.

11. Möbelanordnung (1) nach Anspruch 10, umfassend eine untere Platte (2a), welche mit den ersten Wänden (310) der unteren Profile (30) eingreift, wobei die Tragestruktur (3) wenigstens eine Versteifungsvorrichtung (50) umfasst, welche mit den beiden unteren Profilen (30) eingreift.

12. Möbelanordnung (1) nach Anspruch 10 oder 11, wobei die unteren Profile (30) dieselben Charakteristiken aufweisen wie die lateralen Profile (30).

## Revendications

1. Ensemble d'ameublement (1), par exemple une table ou une étagère surélevée, comprenant :
i) au moins un panneau (2) qui comprend des bords de panneau libres (21, 22, 23, 24) ;
ii) une structure de support (3) qui comprend :
- au moins deux profilés extrudés (30), dans lequel chaque profilé (30) comprend deux extrémités longitudinales (38, 39) et des parois périmétriques définissant une cavité centrale (300), dans lequel, pour au moins un profilé (38, 39), lesdites parois périmétriques comprennent :
• une première paroi (310) qui vient en prise avec l'au moins un panneau (2) ;
• une deuxième paroi (320) incidente sur la première paroi (310) formant un coin de profilé interne (31) ;
• une troisième paroi principalement plane (330), incidente à la fois sur la première paroi (310) et sur la deuxième paroi (320), dans lequel la troisième paroi (330) forme un premier coin de profilé externe (32) avec la première paroi (310), dans lequel ledit premier coin de profilé externe (32) est positionné au niveau d'un bord de panneau libre (21, 22, 23, 24) ;
- un groupe de raccordement logé dans une cavité centrale ou les deux cavités centrales (300), raccordé à deux profilés (30) au niveau de bords longitudinaux respectifs (38, 39), de sorte que lesdits profilés (30) s'étendent incidents l'un à l'autre ;
dans lequel la structure de support (3) comprend en outre :
- au moins un dispositif de raidissement (50) qui s'étend à l'extérieur de la cavité centrale (300) incidente à la deuxième paroi (320) d'un profilé (30) ;
- des moyens de raccordement de corps (60) qui mettent en prise ladite deuxième paroi (320) au niveau du premier coin de profilé interne (31), raccordant ledit dispositif de raidissement (50) audit profilé (30) ;
dans lequel l'ensemble d'ameublement (1) est **caractérisé en ce qu'**il comprend au moins un panneau de couverture auxiliaire (2b) qui met en prise au moins un profilé (30) dans une position distale par rapport à la première paroi (310) et définit une chambre de montage (200) avec le panneau (2), et **en ce que** l'au moins un dispositif de raidissement (50) est logé dans ladite chambre de montage (200).

2. Ensemble d'ameublement (1) selon la revendication 1, dans lequel la troisième paroi (330) comprend un bord d'extrémité (331) au niveau de l'une des extrémités longitudinales (38, 39), dans lequel les deux profilés (30) sont accouplés de sorte que les bords d'extrémité respectifs (34) soient positionnés en contact mutuel.

3. Ensemble d'ameublement (1) selon l'une quelconque des revendications précédentes, dans lequel les extrémités longitudinales (38, 39) des deux profilés (30) sont positionnées en contact mutuel et en prise au niveau du coin.

4. Ensemble d'ameublement (1) selon l'une quelconque des revendications précédentes, dans lequel le groupe de raccordement comprend au moins un élément angulaire (41, 42, 43) qui comprend deux parties d'extrémité (41a, 41b, 43a, 42b, 43a, 43b) incidentes entre elles, par exemple en forme de L, dans lequel chaque partie d'extrémité (41a, 41b, 43a, 42b, 43a, 43b) est logée dans une cavité centrale respective (300).

5. Ensemble d'ameublement (1) selon la revendication 4, dans lequel au moins un élément angulaire (41) est en prise avec la première paroi (310) au niveau du premier coin de profilé externe (32).

6. Ensemble d'ameublement (1) selon la revendication 4 ou la revendication 5, dans lequel au moins un profilé (30) comprend des parois de raccordement (340, 350), qui font saillie à partir des parois périmétriques dans la cavité centrale (300), dans lequel au moins un élément angulaire (41, 42, 43) est en prise avec lesdites parois de raccordement (340, 350).

7. Ensemble d'ameublement (1) selon l'une quelconque des revendications précédentes, dans lequel la structure de support (3) comprend deux profilés latéraux mutuellement distancés (30) et une pluralité de dispositifs de raidissement (50) en prise avec les deux desdits profilés latéraux (30), dans lequel le panneau (2) s'étend principalement le long d'un axe de panneau (Y-Y) et lesdits dispositifs de raidissement (50) sont mutuellement distancés le long de l'axe de panneau (Y-Y).

8. Ensemble d'ameublement (1) selon l'une quelconque des revendications 1 à 5, dans lequel la structure de support (3) comprend deux profilés latéraux (30) mutuellement espacés, et un profilé de tête (30) en prise entre les extrémités longitudinales correspondantes (38, 39) desdits profilés latéraux (30), dans lequel le panneau (2) est en prise avec les premières parois (310) desdits profilés latéraux (30) et/ou dudit profilé de tête (30).

9. Ensemble d'ameublement (1) selon la revendication 8, dans lequel le profilé de tête (30) présente les mêmes caractéristiques que les profilés latéraux (30).

10. Ensemble d'ameublement (1) selon l'une quelconque des revendications 1 à 5, dans lequel la structure de support (3) comprend deux profilés latéraux (30) mutuellement espacés, et deux profilés inférieurs (30), dans lequel chaque profilé inférieur (30) est accouplé à un profilé latéral respectif (30) et peut reposer sur un sol (B), dans lequel le panneau (2) est en prise avec les premières parois (310) desdits profilés latéraux (30).

11. Ensemble d'ameublement (1) selon la revendication 10, comprenant un panneau inférieur (2a) en prise avec les premières parois (310) desdits profilés inférieurs (30), dans lequel la structure de support (3) comprend au moins un dispositif de raidissement (50) en prise avec les deux profilés inférieurs (30).

12. Ensemble d'ameublement (1) selon la revendication 10 ou 11, dans lequel les profilés inférieurs (30) présentent les mêmes caractéristiques que les profilés latéraux (30).
